(19) Europäisches Patentamt
European Patent Office
Office européen des brevets

(11) **EP 4 524 750 A1**

(12) **EUROPEAN PATENT APPLICATION**
published in accordance with Art. 153(4) EPC

(43) Date of publication:
**19.03.2025 Bulletin 2025/12**

(21) Application number: **23826300.8**

(22) Date of filing: **16.06.2023**

(51) International Patent Classification (IPC):
***G06F 11/34*** (2006.01)     ***G06F 3/06*** (2006.01)

(52) Cooperative Patent Classification (CPC):
**G06F 3/06; G06F 11/34;** Y02D 10/00

(86) International application number:
**PCT/CN2023/100767**

(87) International publication number:
**WO 2023/246651 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.06.2022   CN 202210724755
09.09.2022   CN 202211103960**

(71) Applicant: **Huawei Technologies Co., Ltd.
Shenzhen, Guangdong 518129 (CN)**

(72) Inventors:
• **LE, Yongnian**
  **Shenzhen, Guangdong 518129 (CN)**
• **HUANG, Xiaoquan**
  **Shenzhen, Guangdong 518129 (CN)**
• **PENG, Jie**
  **Shenzhen, Guangdong 518129 (CN)**
• **ZHANG, Qian**
  **Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **DATA PROCESSING METHOD, AND PROCESSOR, COMPUTING DEVICE, AND APPARATUS**

(57)     A data processing method, a processor, a computing device, and an apparatus are provided, and relate to the field of computer technologies. The method includes: The processor obtains executable code generated by compiling source code. The executable code includes code corresponding to an extension instruction, where the extension instruction indicates that target data needs to reside in a cache, and the target data is data to be invoked for a plurality of times in a process of executing the executable code. After obtaining the executable code, the processor executes the executable code. When executing the code corresponding to the extension instruction in the executable code, the processor obtains the target data and stores the target data in the cache. The executable code obtained by the processor directly carries the extension instruction, and the processor executes the code corresponding to the first extension instruction, so that the target data may reside in the cache, and the cache can effectively and accurately store the data to be frequently invoked by the processor, thereby effectively ensuring a data read/write rate of the processor.

FIG. 2

**Description**

**CROSS-REFERENCE TO RELATED APPLICATIONS**

This application claims priorities to Chinese Patent Application No. 202210724755.0, filed with the China National Intellectual Property Administration on June 23, 2022 and entitled "HIGH BANDWIDTH MEMORY HBM ALLOCATION METHOD", and to Chinese Patent Application No. 202211103960.1, filed with the China National Intellectual Property Administration on September 9, 2022 and entitled "DATA PROCESSING METHOD, PROCESSOR, COMPUTING DEVICE, AND APPARATUS", which are incorporated herein by reference in their entireties.

**TECHNICAL FIELD**

This application relates to the field of computer technologies, and in particular, to a data processing method, a processor, a computing device, and an apparatus.

**BACKGROUND**

In a conventional processor architecture, between a processor and a memory, a cache is usually disposed as a temporary memory for data access between them, and may be configured for data storage.

If data stored in the cache is data to be frequently invoked by the processor, the processor may directly access the data from the cache, and does not need to access the data from the memory, thereby increasing a data access rate and a data processing speed of the processor.

A high bandwidth memory (high bandwidth memory, HBM) can be used as a cache, especially a last level cache in the cache. The HBM has an HBM bypass (bypass) feature. By virtue of this feature, the HBM can determine data that can be retained in the HBM through analysis. In this way, when the processor reads the data subsequently, the HBM can transmit the data to a previous level cache. This can accelerate the data access rate to some extent.

However, the HBM bypass feature of the HBM depends on a learning capability of the HBM in a short period of time. The data that is finally determined through analysis and that is retained in the HBM may not be definitely the data that is frequently invoked by the processor, and therefore cannot effectively accelerate the data access rate.

**SUMMARY**

This application provides a data processing method, a processor, a computing device, and an apparatus, to enable a cache to store data to be frequently invoked by the processor.

According to a first aspect, a data processing method is provided. The method may be performed by a processor. In the method, the processor obtains executable code generated by compiling source code. The executable code includes code corresponding to an extension instruction, the extension instruction indicates that target data needs to reside in a cache, and the target data is data to be frequently invoked in a process of executing the executable code. After obtaining the executable code, the processor executes the executable code. When executing the code corresponding to the extension instruction in the executable code, the processor obtains the target data and stores the target data in the cache. To distinguish from an extension instruction that appears below, the extension instruction herein is referred to as a first extension instruction.

According to the foregoing method, the executable code obtained by the processor directly carries the first extension instruction, and the processor executes the code corresponding to the first extension instruction, so that the target data may reside in the cache, and the cache can effectively and accurately store the data that is frequently invoked by the processor, thereby effectively ensuring a data read/write rate of the processor.

In a possible implementation, to obtain the executable code, the processor first analyzes the source code, and finds the target data whose reuse score is greater than a threshold from the data invoked by the executable code in a running process. The reuse score of the target data represents a reuse degree of the target data, where the reuse degree may represent a quantity of times or frequency that the target data is invoked. After determining the target data, the processor inserts the first extension instruction into the source code, and compiles the source code with the inserted first extension instruction to generate the executable code.

The processor may include a compiler with a compilation capability, and the foregoing operations may be performed by the compiler. The compiler may be a software program run by the processor, or may be a hardware module on the processor. Descriptions are made herein by only using an example in which the compiler is a part of the processor. In some possible scenarios, the compiler may alternatively be a software program or a hardware module independent of the processor, for example, a software program or a hardware module deployed on another processor. In this scenario, after generating the executable code through compilation, the compiler may send the executable code to the processor, so that the processor executes the executable code.

According to the foregoing method, the processor can determine the target data by analyzing the source code, so that the finally determined target data is the data frequently invoked by the processor in the running process. Compared with data determined based on a bypass feature of an HBM, the target data determined by analyzing the source code is more accurate.

In a possible implementation, when storing the target data in the cache, the processor may send a residence instruction to the cache. The residence instruction indicates that the target data is to be stored in the cache, so as to indicate that the cache can obtain and store the target data according to the residence instruction.

For the cache, after receiving the residence instruction, the cache obtains the target data and stores the target data according to the residence instruction. The cache herein may be any level cache in multilevel caches between the processor and a memory.

According to the foregoing method, through sending the residence instruction, the processor ensures that the cache can effectively store the target data in the cache, and prevents the processor from obtaining the target data from the memory.

In a possible implementation, an LLC of the cache is an HBM, and the first extension instruction indicates that the target data resides in the LLC.

According to the foregoing method, the HBM has high bandwidth and supports large-capacity data storage, so that a large amount of target data can be stored in the HBM, and the processor can obtain the target data from the HBM at a high speed.

In a possible implementation, for the cache, for example, for any level cache, a data replacement policy may be configured in the cache. The data replacement policy indicates that data other than the target data is preferentially removed. For example, when idle space in the cache is less than a threshold, the cache needs to remove some data, and the cache may first remove the data other than the target data in stored data.

According to the foregoing method and the data replacement policy configured in the cache, residence duration of the target data in the cache can be effectively increased.

In a possible implementation, the processor (for example, the compiler in the processor) can further update the target data, and update the executable code. For example, the processor may obtain an event recorded by a PMU, for example, an event related to the cache, and an event related to execution of the executable code by the processor. The processor updates the target data based on the event recorded by the PMU, for example, adds new target data or deletes some target data. The processor inserts a second extension instruction into the source code, where the second extension instruction indicates that the updated target data needs to reside in the cache. The processor re-compiles the source code with the inserted second extension instruction and executes executable code generated through re-compilation. A manner in which the processor executes the executable code generated through re-compilation is similar to the foregoing manner in which the processor executes the executable code. Details are not described herein again.

According to the foregoing method, the processor can update the target data, to ensure that the data that is frequently invoked by the processor can reside in the cache.

In a possible implementation, a location in which the processor inserts the first extension instruction or the second extension instruction into the source code is not limited in this application. Herein, inserting the first extension instruction is used as an example. The processor may insert the first extension instruction into an adjacent row of code invoking the target data for the first time in the source code. For example, the processor inserts the first extension instruction into a row before or after the code invoking the target data for the first time in the source code.

According to the foregoing method, the processor inserts the first extension instruction into a location that is close to the code invoking the target data for the first time in the source code, so that the target data can reside in the cache as early as possible in a subsequent process of executing the executable code.

In a possible implementation, when analyzing the source code to determine the target data, the processor may determine some functions including loops from the source code, and determine a loop sequence of each function in the source code, where the loop sequence of the function includes at least one loop of the function. For a loop sequence of any function, the processor calculates a reuse score of data corresponding to an access node included in each loop in the loop sequence of the function. The processor determines the target data based on the reuse score of the data corresponding to the access node.

According to the foregoing method, the loops in the function are to be frequently executed, and the data corresponding to the access/storage node in the loops definitely includes the data that is frequently invoked in a process in which the processor executes the executable code. By calculating the reuse score of the data corresponding to the access node included in the loops, the processor may effectively determine the target data.

According to a second aspect, a data processing apparatus is provided. The data processing apparatus has a function of implementing behaviors in the method instances in the first aspect. For beneficial effects, refer to the descriptions of the first aspect. Details are not described herein again. The function may be implemented through hardware, or may be implemented by executing corresponding software through the hardware. The hardware or the software includes one or more modules corresponding to the foregoing function. In a possible design, a structure of the data processing apparatus includes a compilation module and an execution module. These modules may perform corresponding functions in the method examples in the first aspect. For details, refer to detailed descriptions in the method examples. Details are not described herein again.

According to a third aspect, this application provides a processor. The processor includes a logic circuit and a power supply circuit. The power supply circuit is configured to supply power to the logic circuit, and the logic circuit is configured to perform the operation steps of the method according to any one of the first aspect or the possible implementations of the first aspect.

According to a fourth aspect, this application further provides a chip. The chip is connected to a memory. The chip includes a processor and a cache. The processor is configured to read and execute computer program code stored in the memory, and perform the method according to any one of the first aspect and the possible implementations of the first aspect.

According to a fifth aspect, this application further provides a computing device. The computing device includes the chip mentioned in the third aspect, or the computing device includes a cache and a processor. Optionally, the computing device further includes a memory, and the memory is configured to store source code and executable code. The processor has a function of implementing behaviors in the method instances according to any one of the first aspect or the possible implementations of the first aspect. For beneficial effects, refer to the descriptions of the first aspect. Details are not described herein again.

According to a sixth aspect, this application further provides a computer-readable storage medium. The computer-readable storage medium stores instructions. When the instructions are run on a computer, the computer is enabled to perform the method according to the first aspect and the possible implementations of the first aspect.

According to a seventh aspect, this application further provides a computer program product including instructions. When the computer program product runs on a computer, the computer is enabled to perform the method according to the first aspect and the possible implementations of the first aspect.

In this application, based on the implementations according to the foregoing aspects, the implementations may be further combined to provide more implementations.

## BRIEF DESCRIPTION OF DRAWINGS

FIG. 1 is a schematic diagram of an architecture of a system according to this application;
FIG. 2 is a schematic diagram of a data processing method according to this application;
FIG. 3 is a schematic diagram of a method for determining target data according to this application;
FIG. 4A is a schematic diagram of tracing of direct access/storage and an access node according to this application;
FIG. 4B is a schematic diagram of tracing of indirect access/storage and an access node according to this application;
FIG. 5 is a schematic structural diagram of a data processing apparatus according to this application; and
FIG. 6 is a schematic diagram of a computing device according to this application.

## DESCRIPTION OF EMBODIMENTS

Before a data processing method provided in this application is described, some concepts in this application are first described.

(1) Source code and executable code

The source code is a text file written by a programmer. The programmer writes the source code in a human-readable language, such as Java, C++, C#. The source code is written according to conventions and rules of a particular language. The source code is human-readable, but unidentifiable by a machine (such as a processor).

The executable code is identifiable and executable by the machine, and includes binary instructions identifiable by the machine. A compiler can transform the source code into the executable code.

(2) Performance monitoring unit (performance monitoring unit, PMU)

The PMU is a hardware apparatus. The PMU is mainly configured to track and count underlying hardware events of a system, for example, an event related to the processor (for example, a quantity of times of executing each instruction, a quantity of exceptions captured by the processor, and a quantity of clock cycles of the processor) and an event related to a cache (for example, a quantity of times that each level cache in the cache is accessed, and a quantity of cache miss (miss) times). These events can represent behaviors of the processor in a process of executing executable code.

In this application, the processor (for example, a compiler in the processor) can analyze the events collected by the PMU to learn an execution process of executable code including an extension instruction. For example, the processor can analyze a branch probability of each branch in the function, and can further determine a reuse degree of target data in a process of executing the executable code. The processor may adjust a key loop sequence of the function according to the branch probability obtained through analysis. The processor may further update the target data based on a reuse degree of data, and remove some data with a lower reuse degree from the target data, or add some data with a higher reuse degree to the target data.

(3) Function and loop

The source code is compiled by complying with a compilation specification, such as object-oriented programming (object-oriented programming, OOP) or procedure-oriented programming (procedure-oriented programming, POP). Programming languages of the object-oriented programming include C++, Java, C#, and the like. Programming languages of the procedure-oriented programming include fortran, C, and the like.

The source code written by complying with a specific compilation specification may include code elements such as a function/method and a field/variable.

The function/method (function/method) is a subroutine in a class. A method usually includes a series of statements and can perform a function. It is referred to as a method in the compilation specification of the object-oriented programming, and referred to as a function in the compilation specification of the procedure-oriented programming. In embodiments of this application, it is collectively referred to as a "function".

A loop is a type of program that may be contained in the function. A loop is a program to be executed for a plurality of times when conditions are met. If conditions are not met, the loop can be exited.

A field/variable (field/variable) stores some data, such as an integer and a character, a character string, a hash table, and a pointer. The field/variable may be used as the target data mentioned in embodiments of this application.

(4) Access/storage instruction and access/storage node

The access/storage node is an operation of accessing or storing data in the source code, and the access node includes a base address and an index. The access/storage node may be represented as [A, index]. A represents the base address, and the base address is an address for data storage. The index indicates an index, and is used for representing a location of data to be accessed or stored in the base address.

The access/storage instruction is an instruction including the access node. There are many types of access/storage instructions. One of them is listed herein. For example, in an assignment instruction, a variable P is assigned to data at a location indicated by an index I on a base address A. When the assignment instruction is executed, the data needs to be read from the location indicated by the index I on the base address A, to determine a value of the assigned variable P. Access/storage instructions with different semantics include different access/storage nodes, and include different quantities of access/storage nodes.

(5) Basic block

For any function, the compiler splits the function into a plurality of independent instruction sets according to a preset standard. Any independent instruction set is a basic block. A first executed basic block in the function is an entry basic block of the function, and a last executed basic block is an exit basic block of the function. The first executed basic block in a loop is a head basic block of the loop.

(6) Branch and branch probability

A function has a location where the function can jump to a plurality of execution paths. The location is usually where a determining sentence such as an if sentence, a while sentence, and an else sentence is located. When the location is executed, only one of the plurality of execution paths can be executed each time. Any execution path may be referred to as a branch. A probability that any branch is executed is referred to as a branch probability. The branch probability is related to a determining sentence at the location. In this application, the compiler can analyze specific semantics of the determining sentences at the location, to estimate the branch probability of each branch. For example, a value range of x is an integer ranging from 1 to 10. If a determining sentence at the location is if x>8, it may indicate that the branch will be divided into two branches. One branch is a branch where x>8 and another branch is a branch where x<8. Based on the value range of x, a branch probability of the branch where x>8 is 20% and a branch probability of the branch where x<8 is 80%.

The following further describes the data processing method provided in this application with reference to the accompanying drawings.

To improve validity of residing data in a cache 200, this application provides a data processing method. A processor 100 may analyze source code to determine target data. The target data is data to be frequently invoked in an execution process of executable code corresponding to the source code. The processor 100 can insert an extension instruction for the target data into the source code, where the extension instruction indicates that the target data is to reside in the cache 200. The processor 100 compiles the source code with the inserted extension instruction into the executable code, and executes the executable code. When executing the executable code and executing code corresponding to the extension instruction, the processor 100 obtains the target data and stores the target data in the cache 200. In this application, when executing the code corresponding to the extension instruction, the processor 100 may write the target data into the cache 200 in advance, to improve data read/write efficiency of the processor 100.

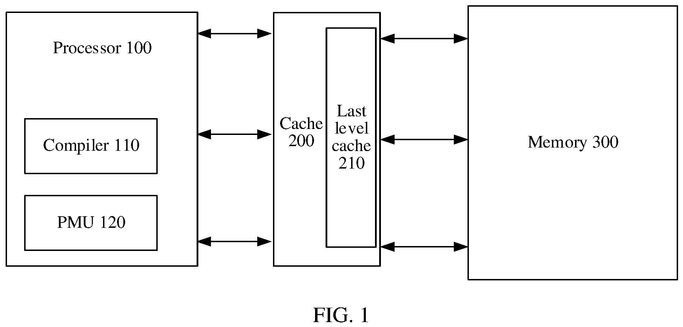

FIG. 1 is a schematic diagram of a structure of a system according to this application. The structure of the system includes a processor 100 and a cache 200, and optionally, further includes a memory 300. The memory 300 may be understood as a memory of the processor 100. The processor 100 includes a compiler 110 and a PMU 120. A specific form of the system is not limited in this application. The system may be a computer chip, for example, a system on chip (system on chip, SoC).

For the compiler 110, the compiler 110 may be a software program running on the processor 100, or may be a part of hardware modules of the processor 100. The PMU 120 may be located inside the processor 100 as a hardware module.

FIG. 1 shows only a possible structure of the system. In some examples, the compiler 110 and the PMU 120 may be a hardware module or a software program that is independent of the processor 100 and that is located outside the processor 100. In this embodiment of this application, descriptions are made only by using the structure of the system shown in FIG. 1 as an example. In a scenario in which the compiler 110 and the PMU 120 may be independent of the processor 100, from a perspective of functions, the processor 100, the compiler 110, and the PMU 120 are similar. Details are not described herein again.

A type of the processor 100 is not limited in this application, and any processor 100 that can be configured to execute the executable code is applicable to this embodiment of this application. The processor 100 may be a central processing unit (central processing unit, CPU), a graphics processing unit (graphics processing unit, GPU), or the like. The processor 100 may also be implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), a generic array logic (generic array logic, GAL), or any combination thereof.

In this embodiment of this application, the cache 200 in the system includes multilevel caches. A last level cache 210 in the multilevel caches may be a high bandwidth memory (high bandwidth memory, HBM). The "multilevel cache" divides the cache 200 into a plurality of levels. A cache closer to a core of the processor 100 has a smaller level, a faster read/write speed, and a smaller capacity. That is, the last level cache 210 (last level cache, LLC) in the multilevel caches is a cache that is the farthest from the core of the processor 100 and has a largest capacity in the multilevel caches. The LLC 210 can be configured to cache 200 data exchanged between the processor 100 and the memory. From a perspective of the processor 100, the LLC may be understood as a cache of the processor 100. From a perspective of the memory, the LLC may also be used as a cache of the memory.

Compared with a case in which a static random-access memory (static random-access memory, SRAM) is used as the last level cache 210, the HBM supports large-capacity data storage, and can effectively expand a capacity of the cache 200. The HBM also has higher bandwidth. This can effectively improve a data read/write rate of the cache 200, and is more suitable for concurrent access scenarios.

The compiler 110 is a software program running on the processor 100 or a hardware module of the processor 100, or may be a software program running on another processor 100 or a hardware module of the another processor 100. The compiler 110 has a compilation capability of compiling the source code to be executed by the processor 100 into executable code that can be identified by the processor 100. In this application, the compiler 110 has an analysis capability, and can determine, through analyzing the source code, the target data to be frequently invoked by the source code, and inserts the extension instruction for the target data into the source code, where the extension instruction indicates that the target data needs to reside in the LLC. Then, the compiler 110 compiles the source code with the inserted extension instruction, to generate the executable code to be executed by the processor 100.

It should be noted that, descriptions are made by using an example in which the extension instruction indicates that the target data needs to reside in the LLC 210. In some scenarios, the extension instruction may also indicate that the target data needs to reside in another level cache included in the cache 200.

The processor 100 can obtain the executable code generated by the compiler 110 through compilation, and execute the executable code. In a process in which the processor 100 executes the executable code, the processor 100 may migrate data to be processed from the memory 300 to the cache 200, and may further store processed data in the cache 200. When executing the code corresponding to the extension instruction in the executable code, the processor 100 may initiate a residence instruction to the LLC, where the residence instruction indicates the LLC to store the target data.

In the process of executing the executable code by the processor 100, the PMU 120 may monitor the process, and record an event related to the processor 100 (especially an event that occurs in the process in which the processor 100 executes the executable code) and an event related to the cache 200.

The compiler 110 may invoke the event recorded by the PMU 120, to update the determined target data, add the extension instruction to the source code for updated target data, and generate new executable code through compilation. The processor 100 may obtain the new executable code, and execute the new executable code.

The memory 300 is usually configured to store computer program code and the like to be executed by the processor 100. In this embodiment of this application, the memory 300 may be configured to store the executable code of the compiler 110, and the processor 100 may run the compiler 110 by invoking the executable code. The memory 300 may also store the source code to be compiled by the compiler 110, and the compiler 110 may invoke the source code from the memory 300, to compile and analyze the source code. The memory 300 may also store the executable code generated by compiling the source code. After obtaining the executable code through compilation, the compiler 110 may store the executable code in the memory 300. The processor 100 may invoke the executable code and execute the executable code.

A dynamic random access memory (dynamic random access memory, DRAM) is usually used as the memory 300. In addition to the DRAM, the memory 300 may be another random access memory, for example, an SRAM. In addition, the memory 300 may alternatively be a read only memory (read only memory, ROM). The read-only memory, for example, may be a programmable read only memory (programmable read only memory, PROM), an erasable programmable read only memory (erasable programmable read only memory, EPROM), or the like. The memory 300 may alternatively be a dual in-line memory module (dual in-line memory module, DIMM), that is, a module formed by a dynamic random access memory (DRAM), or may be a solid-state drive (Solid-State Drive, SSD). Alternatively, the memory 300 may be a combination of the foregoing memories. A quantity and types of the memories 300 are not limited in this embodiment of this application.

In the foregoing descriptions, the target data is obtained by the compiler 110 by analyzing a loop of a function in the source code, and the target data may be a part of data to be invoked in a running process by using the function in the source code. In an actual application, a programmer may mark some data to be frequently invoked in a process of writing the source code. The compiler 110 may be capable of identifying the mark, and using data with the mark as the target data.

Different from a compiler 110 only having a compilation capability, the compiler 110 provided in this embodiment of this application has an analysis capability to determine the target data. The compiler 110 further has an extension instruction insertion capability to insert the extension instruction for the target data into the source code, and to compile the extension instruction. Due to existence of the compiler 110, related code (the code corresponding to the extension instruction) indicating that the target data resides in the cache 200 is added to the executable code to be executed by the processor 100, so that the processor 100 can write the target data into the cache 200 in advance, and the processor 100 does not need to read the target data from the memory for a plurality of times, thereby improving a data reading rate. In addition, the compiler 110 can further update the target data to generate the new executable code. The updated target data better conforms to an actual case in which the processor 100 executes the executable code. In a process of executing the new executable code, the processor 100 can also write the data that is actually frequently invoked into the cache 200 in advance, thereby further ensuring the data read rate of the processor 100.

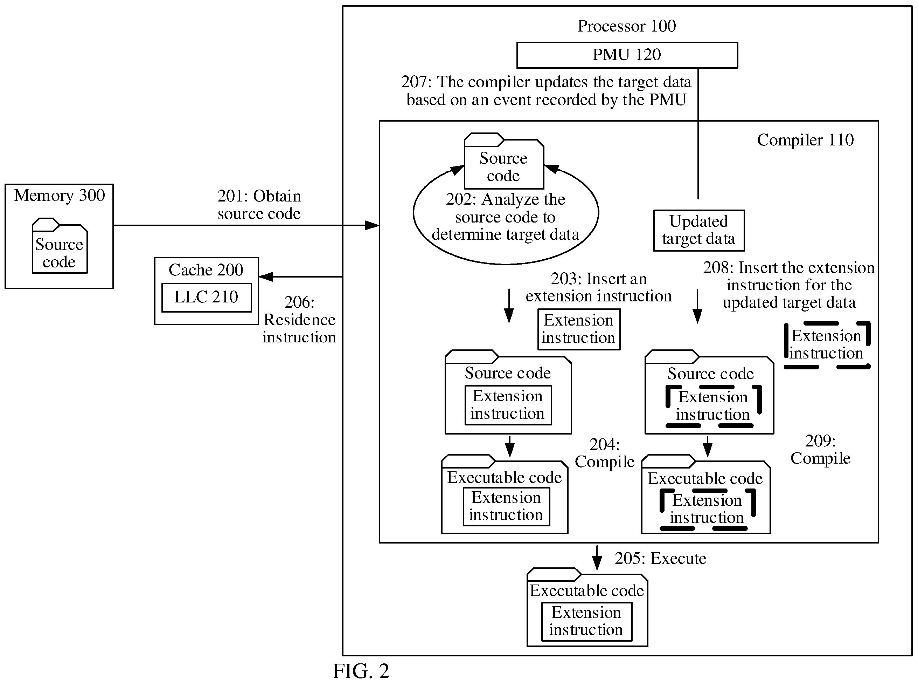

The following describes a data processing method provided in this application with reference to FIG. 2. The method includes the following steps.

Step 201: A processor 100 obtains source code. The processor 100 may obtain, from the memory 300, the source code to be compiled.

Step 202: The processor 100 analyzes the source code to determine target data. The target data is data that needs to be frequently invoked in an execution process of executable code generated by compiling the source code, and whose reuse score is greater than a threshold. A reuse score of data indicates a reuse degree of the data.

Step 201 and step 202 may be performed by the compiler 110 in the processor 100. The following describes a case in which the processor 100 performs step 201 and step 202.

This application provides two manners of determining the target data. The following separately describes the two manners.

Manner 1: Identify the data with the mark in the source code.

The source code is written by a programmer in a human-readable language. Through understanding the source code, the programmer or another person can better understand a meaning to be represented by the source code, and can also determine the data to be frequently invoked in the source code. Therefore, the programmer or the another person may determine, based on an understanding of the source code, the data that is frequently invoked, and mark the data. For example, the programmer or the another person adds a mark to the data before or after the data at a location where the data is introduced for the first time, to indicate that the data is the frequently invoked data. The mark is set in a format pre-agreed on with the processor 100.

When analyzing the source code, the processor 100 may identify the data with the mark, and use the data with the mark as the target data.

Manner 2: Analyze the source code to determine the target data.

When executing the executable code generated by compiling the source code, the processor 100 executes the executable code according to logic of the source code. The data that can be frequently invoked in the source code is usually data involved in a loop. The loop is a segment of code that may be included in the function. When executing the loop, the processor 100 executes the loop for a plurality of times when a loop condition (for example, whether a value of a variable is less than a threshold or greater than a threshold) is met, until the loop condition is not met. When the loop condition is not met, the processor 100 exits the loop, and executes related code after the loop.

Because the loop may be executed for a plurality of times, data invoked in the loop may be the target data. Therefore, the processor 100 may analyze the source code to determine a loop included in the source code and determine the target data based on the data invoked in the loop.

The processor 100 may directly use data invoked in each loop as the target data. The processor 100 may also analyze the loop to determine a target loop in which a quantity of loops or a quantity of times of invoking data in the loop is greater than a threshold, and use the data invoked in the target loop as the target data. In this case, the quantity of loops in the target loop or the quantity of times of invoking the data in the loop represents a reuse degree of the target data. To be specific, the quantity of loops in the target loop or the quantity of times of invoking the data in the loop may be used as a reuse score of the data, and data involved in the target loop is selected as the target data.

A manner in which the processor 100 determines the target data based on the data invoked in each loop in the source code is not limited in this embodiment of this application. Any manner of determining the target data based on the data invoked in each loop in the source code is applicable to this embodiment of this application.

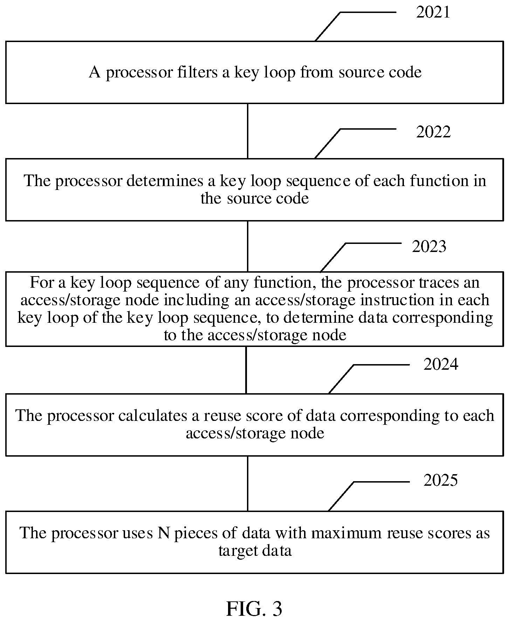

For Manner 2, as shown in FIG. 3, this application provides a manner of determining the target data. For details, refer to the following steps.

Step 2021: The processor 100 filters a key loop from the source code. The key loop is a loop that meets a first filter criteria. The first filter criteria includes some or all of the following: an access node in the loop is greater than a node threshold, and a proportion of an access instruction in the loop to all instructions in the loop is greater than a proportion threshold. The node threshold and the proportion threshold may be preset.

When performing the step 2021, the processor 100 may sequentially filter the source code based on different granularities.

First, the processor 100 may filter the source code based on a function granularity, remove complex functions and some functions that are executed only once from the source code, to find a first candidate function from the source code. The first candidate function meets some or all of the following:

1. The function contains loops.
2. The function is not a library function.
3. No new operations are defined in the function.

Then, the processor 100 further filters the first candidate function based on a loop granularity, removes a loop including a plurality of branches or functions that need to collaborate with other data (such as a file or a function) other than the function, to filter the second candidate function from the first candidate function. The second candidate function meets some or all of the following:

1. The loop in the function contains only a single exit edge.
2. The loop in the function does not involve a plurality of branches.
3. The loop in the function is not a loop defined by a macro.
4. The loop in the function does not invoke a file other than the source code.
5. The loop in the function does not invoke other functions.
6. The loop in the function does not invoke a customized operation in the function.

Finally, the processor 100 may determine, from the second candidate function, a quantity of access/storage nodes included in the loop in the second candidate function and a proportion of an access instruction to all instructions in the loop, so as to determine a key loop that meets a filter criteria.

It should be noted that, in some source code, there is a nested loop. For example, a loop A further includes a loop B. For another example, a loop C further includes a loop D, and the loop D further includes a loop E. Because the innermost loop (for example, the loop B and the loop D) is a loop executed the most times, the processor 100 may consider only the innermost loop when filtering the key loop. That is, the key loop is the innermost loop. Certainly, when filtering the key loop, the processor 100 may also consider an outer loop, that is, the key loop may be the innermost loop, or may be the outer loop.

Step 2022: The processor 100 determines a key loop sequence of each function in the source code. The key loop sequence of the function includes at least one key loop of the function, and the at least one key loop in the key loop sequence of the function may be ranked in an execution order.

In the step 2022, the processor 100 determines the key loop. The processor 100 may analyze functions in the source code, to determine a target function including the key loop from the functions, and generate the key loop sequence of the function by ranking the key loops in the target function in an execution sequence.

It should be noted that, when there are a plurality of branches in the function, and the key loops of the function are distributed on the plurality of branches, the processor 100 may select key loops distributed on a branch with a highest branch probability in the plurality of branches, and rank these key loops according to an execution sequence on the branch, to generate the key loop sequence of the function. That is, the key loop sequence of the function is a key loop sequence of the branch with the highest branch probability in the function, and a key loop in the key loop sequence of the branch is a key loop on the branch.

The processor 100 may also rank key loops on each branch according to an execution sequence of the key loops on the branch, to generate a key loop sequence of each branch. The processor 100 combines the key loop sequences of each branch, to generate the key loop sequence of the function. That is, the key loop sequence of the function includes the key loop sequence of each branch.

This application provides a method for obtaining a key loop sequence of a function. Specific methods are as follows:

For any function, the processor 100 may traverse the function at a granularity of a basic block, to obtain a key loop sequence of the function. The processor 100 may traverse the function from an entry basic block in the function to an exit basic block of the function at the granularity of the basic block for the source code. Each time the processor 100 traverses a basic block, the processor 100 may perform the following steps.

Step 1: Determine whether the basic block is a head basic block of a loop; if yes, go to step 2, or otherwise, go to step 5.

Step 2: Determine whether the loop has not been traversed; if yes, go to step 3, or otherwise, go to step 5.

Step 3: Determine whether the loop is a key loop; if yes, go to step 4, or otherwise, go to step 5.

Step 4: Add the loop to the key loop sequence, and mark the loop as a traversed loop.

Step 5: End traversal of the basic block, extract a next basic block, and perform step 1.

It should be noted that, when step 5 is performed, if the function includes a plurality of branches, a basic block on a branch with a highest branch probability may be selected as the next basic block.

The processor 100 (which is specifically the compiler in the processor) cyclically performs the foregoing step 1 to step 5, and may generate the key loop sequence of the function after traversing from the entry basic block to the exit basic block.

Step 2023: For a key loop sequence of any function, the processor 100 traces an access/storage node including an access/storage instruction in each key loop of the key loop sequence, to determine data corresponding to the access/storage node. The data corresponding to the access/storage node is data stored at a base address of the access/storage node.

Step 2024: The processor 100 calculates a reuse score of data corresponding to each access/storage node. The processor 100 may calculate the reuse score of the data corresponding to each access/storage node according to an invoking manner of the data corresponding to each access/storage node.

The invoking manner of the data corresponding to the access/storage node describes a manner used when the data is invoked. The invoking manner includes but is not limited to: a data reuse manner, an access/storage manner indicated by an access/storage node, and a data read/write manner.

(1) Data reuse manner.

The data reuse manner refers to an execution relationship of invoking data for a plurality of times.

When the executable code corresponding to the source code is executed, the data may be invoked at the same time. This type of invoking is usually embodied in the source code with an introduction representing parallel computing. Data invoked after the parallel computing introduction is data to be reused in parallel. Correspondingly, this data reuse manner is a parallel reuse manner. Certainly, the data may also be invoked one by one, and this data invoking reuse manner is a serial reuse manner.

A quantity of data reuse times may vary according to different data reuse manners. The quantity of data reuse times indicates a quantity of times that the data is invoked.

(2) Access/storage manner indicated by the access/storage node.

The access/storage manner indicated by the access/storage node is classified into direct access/storage and indirect access/storage. The direct access/storage means that an index in the access/storage node is directly indicated, that is, an index part in the access/storage node is a specific value of the index.

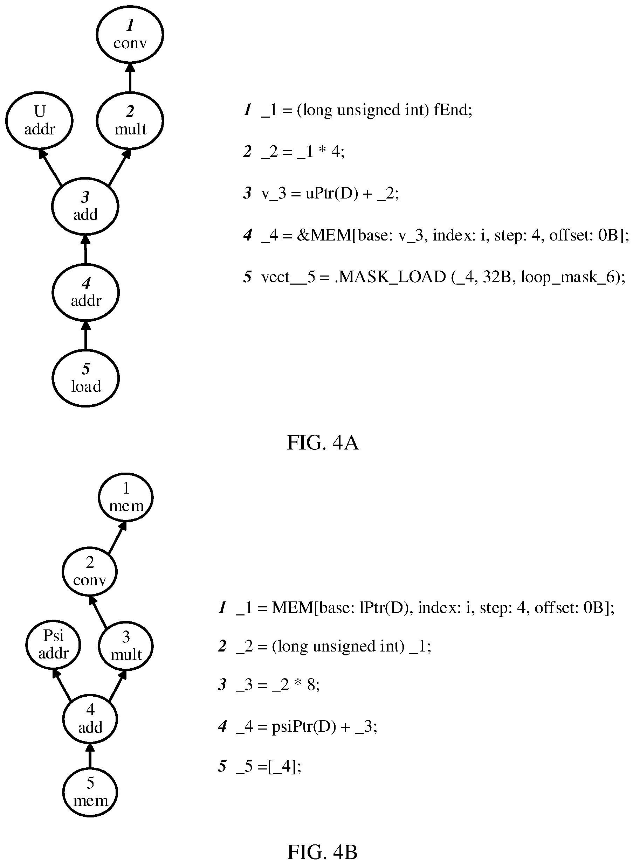

For ease of understanding the access/storage manner indicated by the access/storage node, the following provides descriptions with reference to FIG. 4A and FIG. 4B.

FIG. 4A is a schematic diagram of tracing of direct access/storage and an access node according to this application. FIG. 4A shows source code including five instructions, each line of code is an instruction, and a number before each line of code is a serial number of the instruction. A tree-like structure on the left of FIG. 4A describes a relationship between the five instructions, where arrows indicate a tracing direction. A number in a node in the tree-like structure represents a serial number of the instruction, and a character under the serial number indicates a type of the instruction. "load" indicates a loading instruction, "addr" indicates to obtain data in an address, "add" indicates an addition instruction, "mult" indicates a multiplication instruction, and "conv" indicates a forcible transfer instruction. "u" in the node represents a variable u that appears in an instruction 3.

An instruction of a serial number 4 is an access/storage instruction, where the access/storage instruction carries an access/storage node, and the access/storage node is the part represented by "[]". The part after "base" is a base address. The part after "index" is an index. The access/storage node directly indicates the index and the base address, and belongs to the category of direct access/storage.

Indirect access/storage means that the index in the access/storage node is indirectly indicated, that is, the index part in the access/storage node is not a specific value, but needs to be further dereferenced.

FIG. 4B is a schematic diagram of tracing of indirect access/storage and an access node according to this application. FIG. 4B shows source code including five instructions, each line of code is an instruction, and a number before each line of code is a serial number of the instruction. A tree-like structure on the left of FIG. 4B describes a relationship between the five instructions, where arrows indicate a tracing direction. A number in a node in the tree-like structure represents a serial number of the instruction, and a character under the serial number indicates an operation represented by the instruction. "addr" indicates to obtain data in an address, "add" indicates an addition instruction, "mult" indicates a multiplication instruction, and "mem" indicates an access/storage instruction. "psi" in the node represents a variable psi that appears in the instruction 4.

An instruction of a serial number 5 is an access/storage instruction, where the access/storage instruction carries an access/storage node, and the access/storage node is the part represented by "[]". The part in [] does not directly indicate the base address and the index, needs to be further dereferenced, and belongs to the category of indirect access/storage.

(3) Data read/write manner

The data read/write manner indicates data writing or data reading. It is generally considered that power consumption during data writing is greater than power consumption during data reading.

A reuse score level of any data x may be calculated by using the following formula:

$$Level = parallel(x)*(reuse(x)+regular(x)+cost(x))$$

parallel(x) represents that the data x is reused in parallel or in serial, parallel reuse and serial reuse have different values, and the value of parallel reuse may be greater than the value of serial reuse. reuse(x) indicates a quantity of times that the data x is reused in serial. regular(x) represents an access/storage manner of data, and the direct access/storage and the indirect access/storage may correspond to different values of regular(x). cost(x) indicates a read/write manner of the data, and data writing or data reading may correspond to different values of cost(x).

A reuse score of data corresponding to each access/storage node represents a reuse degree of the data. A larger reuse degree indicates a larger quantity of times of invoking the data, and a higher reuse score of the data correspondingly.

Step 2025: The processor 100 uses N pieces of data with maximum reuse scores as the target data, where N is a preset positive integer.

Step 203: The processor 100 inserts an extension instruction into a related location of invoking the target data for the first time in the source code. The extension instruction indicates that the target data is to reside in an LLC.

The related location in which the target data is invoked for the first time may be an adjacent row or several rows before and after code that invokes the target data for the first time in the source code. For example, the related location of invoking the target data for the first time may be located before the code invoking the target data for the first time, for example, one row or K rows before the code invoking the target data for the first time, where K is a positive integer. For another example, the related location of invoking the target data for the first time may alternatively be located after the code invoking the target data for the first time, for example, one row or K rows after the code invoking the target data for the first time, where K is a positive integer.

Step 204: The processor 100 compiles the source code with the inserted extension instruction, and generates executable code including code corresponding to the extension instruction. After generating the executable code, the processor 100 may store the executable code in the memory 300.

In this embodiment of this application, the processor 100 has a capability of compiling the extension instruction, and can compile the extension instruction into an assembly instruction that can be identified by a machine. The processor 100 may compile instructions in the source code with the inserted extension instruction, to generate the executable code.

Step 205: The processor 100 executes the executable code, and when the processor 100 executes the code corresponding to the extension instruction (that is, executes the assembly instruction corresponding to the extension instruction), the processor 100 may send a residence instruction to an LLC 210, where the residence instruction indicates the LLC 210 to store the target data.

If the executable code is stored in the memory 300, the processor 100 may first obtain the executable code from the memory 300, and execute the executable code after obtaining the executable code.

Step 206: After receiving the residence instruction, the LLC 210 obtains the target data (for example, the LLC 210 may obtain the data from a memory) and stores the target data.

That is, the processor 100 performs step 205 for any target data. In this way, data in the LLC 210 may be classified into two types: one type is the target data indicated by the residence instruction, and another type is other data.

To further increase time for storing the target data in the LLC 210 (that is, residence time of the target data in the LLC 210), a data replacement policy may be configured in the LLC 210. The data replacement policy indicates to preferentially remove data other than the target data when data in the LLC 210 needs to be removed (for example, idle space in the LLC 210 is less than a threshold).

A manner of executing the data replacement policy by the LLC 210 is not limited in this embodiment of this application. The following lists two possible execution manners.

Manner 1: In the LLC 210, the LLC 210 may set a type of data, where a first type of data is the target data indicated by the residence instruction, and a second type of data is other data. For example, when receiving the residence instruction, the LLC 210 may set a type of the data indicated by the residence instruction as the first type. Other data is correspondingly set as the second type.

The LLC 210 may further set residence values for different types of data, and the residence value has a preset value range. To be specific, a maximum value and a minimum value of the residence value are determined. A residence value of the first type of data takes the minimum value.

Initially, a residence value of the second type of data may be set to a value greater than the residence value of the first type of data, or may be set to the minimum value. A specific value of the residence value of the second type of data is not limited in this application, and residence values of different second types of data may be same or may be different.

When there is no idle space in the LLC 210 or the idle space is less than the threshold, and new data cannot be stored, the LLC 210 may remove stored data, and the LLC 210 may preferentially remove data whose residence value is equal to the maximum value.

If there is no data whose residence value is equal to the maximum value in the LLC 210, the LLC 210 may increase the residence value of the second type of data, and remove data whose residence value is the maximum value. If there is still no data whose residence value is the maximum value in the LLC 210 after the residence value of the second type of data is increased, the LLC 210 may continue to increase the residence value of the second type of data.

Manner 2: In the LLC 210, the LLC 210 may set a type of data, where a first type of data is the target data indicated by the residence instruction, and a second type of data is other data. For example, when receiving the residence instruction, the LLC 210 may set a type of the data indicated by the residence instruction as the first type. Other data is correspondingly set as the second type.

The LLC 210 may further set residence values for different types of data, and the residence value has a preset value range. To be specific, a maximum value and a minimum value of the residence value are determined. A residence value of the first type of data takes the minimum value.

The LLC 210 may further set a count value, where the count value is used for recording a quantity of times that the LLC 210 modifies a residence value of the second type of data. Each time the residence value of the second type of data is modified, the count value is increased by one.

Initially, the residence value of the second type of data may be set to a value greater than the residence value of the first type of data, or may be set to the minimum value. A specific value of the residence value of the second type of data is not limited in this application, and residence values of different second types of data may be same or may be different.

When there is no idle space in the LLC 210 or the idle space is less than the threshold, and new data cannot be stored, the LLC 210 may remove stored data, and the LLC 210 may preferentially remove data whose residence value is equal to the maximum value.

If there is no data whose residence value is equal to the maximum value in the LLC 210, whether the count value is greater than a specified value is determined. If the count value is not greater than the specified value, the LLC 210 may increase the residence value of the second type of data, increase the count value by one, and remove data whose residence value is the maximum value. If the count value is greater than the specified value, the LLC 210 may uniformly increase the residence value of the first type of data, and remove data whose residence value is equal to the maximum value.

If there is still no data whose residence value is the maximum value in the LLC 210 after the residence value of the second type of data or the residence value of the second type of data is increased, the LLC 210 may continue to perform the foregoing operations. That is, the LLC 210 determines whether the count value is greater than the specified value. If the count value is not greater than the specified value, the LLC 210 may increase the residence value of the second type of data, increase the count value by one, and remove data whose residence value is the maximum value. If the count value is greater than the specified value, the LLC 210 may uniformly increase the residence value of the first type of data, and remove data whose residence value is equal to the maximum value.

In this embodiment of this application, the processor 100 may further update the target data, for example, add the target data or reduce the target data. The processor 100 may insert an extension instruction for the updated target data into the source code, and generate new executable code through compilation. The processor 100 executes the new executable code. For a manner in which the processor 100 updates the target data, refer to step 206.

Step 207: The processor 100 obtains an event recorded by the PMU 120, and updates the target data based on the event recorded by the PMU 120.

The processor 100 may analyze a branch probability of each branch in a source code function based on the event (for example, a quantity of execution times of each instruction and an event of a data cache miss in a cache 200) recorded by the PMU 120. For example, the event recorded by the PMU 120 includes the event of a data cache miss in the cache 200. When data cache miss occurs in the cache 200, a branch that invokes the data is not executed. This indicates that a branch probability of each branch obtained when the executable code is actually executed is different from a branch probability obtained through analyzing the source code. The event recorded by the PMU 120 includes the quantity of execution times of each instruction, and a quantity of execution times of instructions in different branches can indicate a quantity of execution times of each branch, so as to determine the branch probability of each branch.

The processor 100 may determine, through the event recorded by the PMU 120, the branch probability of each branch obtained when the executable code is actually executed. The processor 100 may regenerate a key loop sequence of the function based on the determined branch probability of the branch (applicable to a scenario in which the key loop sequence of the function is a key loop sequence of a branch with a highest branch probability in the function).

In addition, when calculating the reuse score of the data, the processor 100 may also refer to the event recorded by the PMU 120. For example, when an event that is recorded by the PMU 120 and that is related to the cache 200 shows that cache miss occurs in the cache 200 to a piece of data for a plurality of times, it indicates that a reuse degree of the data is high, and the processor 100 may increase the reuse score of the data. Specifically, the processor 100 may add a weight value related to the event that is recorded by the PMU 120 and that is related to the cache 200 to a formula for calculating the reuse score of the data. When the event that is recorded by the PMU 120 and that is related to the cache 200 shows that a quantity of times that cache miss occurs in the cache 200 to a piece of data is greater than a specific value, a value of the weight value may be changed to a larger value, to improve the reuse score of the data.

Step 208: The processor 100 inserts the extension instruction into a related location at which the updated target data is introduced for the first time. The extension instruction indicates that the updated target data is to reside in the LLC. A manner in which the processor 100 performs step 207 is similar to a manner in which the processor 100 performs step 203. For details, refer to the foregoing descriptions. Details are not described herein again.

Step 209: The processor 100 compiles the source code with the inserted extension instruction, and generates executable code including code corresponding to the extension instruction. A manner in which the processor 100 performs step 208 is similar to a manner in which the processor 100 performs step 204. For details, refer to the foregoing descriptions. Details are not described herein again. Then, the processor 100 may send the executable code to the processor 100, and the processor 100 re-executes the new executable code. For a manner in which the processor 100 executes the executable code, refer to related descriptions of steps 205 and 206. Details are not described herein again.

In this application, the processor 100 can analyze the source code to determine the target data that is frequently invoked by the processor 100 in the process of executing the executable code. The target data determined from the source code is more accurate, and is the data that is frequently invoked by the processor 100 in a true sense. After determining the target data, the processor 100 may insert the extension instruction for the target data into the source code, and then compile the source code to generate the executable code. In this way, the executable code includes the code corresponding to the extension instruction. In a process in which the processor 100 executes the executable code, when the code corresponding to the extension instruction is executed, the processor 100 may obtain the target data according to the extension instruction and store the target data in the cache 200. In this way, the target data may be stored in the cache 200 in advance, and the processor 100 does not need to invoke the target data from the memory when the processor 100 needs to invoke the target data, thereby improving a data read/write rate of the processor 100. In addition, because the processor 100 can update the target data based on the event recorded by the PMU 120 in the process of executing the executable code, and then update the executable code, accuracy of the target data is improved. It can be ensured that the target data that is truly frequently invoked by the processor 100 is stored in the cache 200, thereby further improving the data read/write rate of the processor 100.

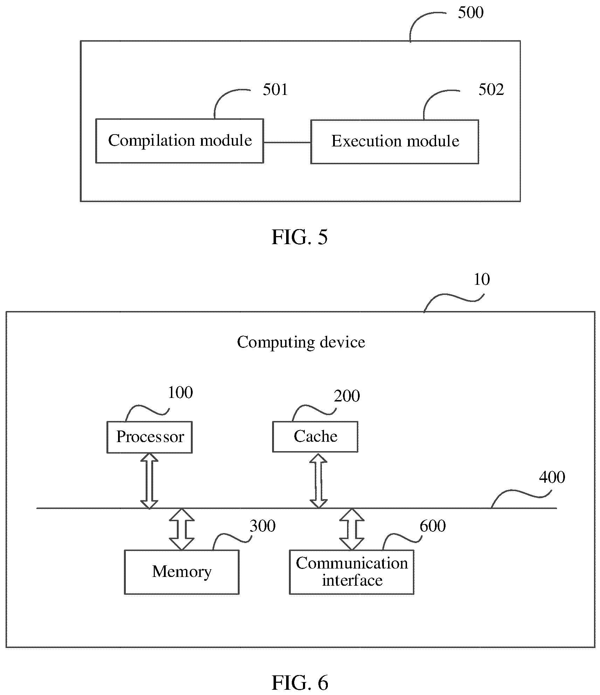

Based on a same inventive concept as the method embodiment, this application further provides a data processing apparatus. The data processing apparatus is configured to perform the method performed by the processor 100 in the method examples shown in FIG. 2 or FIG. 3. For related features, refer to the foregoing method examples. Details are not described herein again. As shown in FIG. 5, a data processing apparatus 500 includes a compilation module 501 and an execution module 502.

The compilation module 501 is configured to obtain executable code, where the executable code includes code corresponding to a first extension instruction, the first extension instruction indicates that target data needs to reside in a cache, and the target data is data to be invoked for a plurality of times in a process of executing the executable code. The first extension instruction corresponds to the extension instruction mentioned in the embodiment shown in FIG. 2.

The execution module 502 is configured to execute the code corresponding to the first extension instruction in the executable code, obtain the target data, and store the target data in the cache.

It should be understood that the data processing apparatus 500 in this embodiment of this application may be implemented by a central processing unit (central processing unit, CPU), or may be implemented by an application-specific integrated circuit (application-specific integrated circuit, ASIC), or may be implemented by a programmable logic device (programmable logic device, PLD). The PLD may be a complex programmable logic device (complex programmable logical device, CPLD), a field-programmable gate array (field-programmable gate array, FPGA), a generic array logic (generic array logic, GAL), a data processing unit (data processing unit, DPU), a system on chip (system on chip, SoC), or any combination thereof. Alternatively, when the data processing method shown in FIG. 2 or FIG. 3 may be implemented through software, the apparatus 500 and each module thereof may also be software modules.

In a possible implementation, when obtaining the executable code, the compilation module 501 may analyze the source code to determine the target data, where a reuse score of the target data is greater than a threshold, and the reuse score of the target data indicates a reuse degree of the target data. The compilation module 501 inserts the first extension instruction into source code, and compiles the source code with the inserted first extension instruction to generate executable code.

In a possible implementation, when obtaining the target data and storing the target data in the cache, the execution module 502 sends a residence instruction to the cache, where the residence instruction indicates that the target data is to be stored in the cache. In this way, after receiving the residence instruction, the cache obtains the target data and stores the target data according to the residence instruction.

In a possible implementation, an LLC of the cache is an HBM, and the first extension instruction indicates that the target data resides in the LLC.

In a possible implementation, the compilation module 501 can update the target data, and then update the executable code. The compilation module 501 obtains an event recorded by a PMU. The compilation module 501 updates the target data based on the event recorded by the PMU. After inserting a second extension instruction into the source code, the compilation module 501 re-compiles the source code with the inserted second extension instruction to generate executable code, where the second extension instruction indicates that the updated target data needs to reside in the cache. The second extension instruction corresponds to the extension instruction for the updated target data in FIG. 2. The execution module 502 executes the executable code generated through re-compilation.

In a possible implementation, when inserting the first extension instruction into the source code, the compilation module 501 inserts the first extension instruction into an adjacent row of code invoking the target data for the first time in the source code.

In a possible implementation, when analyzing the source code to determine the target data, the compilation module 501 determines a loop sequence of each function in the source code, where the loop sequence of the function includes at least one loop of the function. For a loop sequence of any function, the compilation module 501 calculates a reuse score of data corresponding to an access node included in a loop in the loop sequence of the function, where the reuse score indicates a reuse degree of the data in the source code. The compilation module 501 determines the target data based on the reuse score of the data corresponding to the access node.

It should be noted that, in embodiments of this application, module division is an example, and is merely a logical function division. In actual implementation, another division manner may be used. Functional modules in embodiments of this application may be integrated into one processing module, or each of the modules may exist alone physically, or two or more modules are integrated into one module. The integrated module may be implemented in a form of hardware, or may be implemented in a form of a software functional module.

This application further provides a computing device. FIG. 6 is a schematic structural diagram of the computing device. The computing device 10 includes a processor 100, a cache 200, a memory 300, a bus 400, and a communication interface 600. The processor 100, the cache 200, the memory 300, and the communication interface 600 communicate with each other through the bus 400. The bus 400 may be a peripheral component interconnect express (peripheral component interconnect express, PCIe)-based line, or may be a bus of another type.

For descriptions of the processor 100, the cache 200, and the memory 300, refer to the foregoing descriptions.

Details are not described herein again.

This application further provides a processor. The processor includes a logic circuit and a power supply circuit. The power supply circuit is configured to supply power to the logic circuit, and the logic circuit is configured to perform operation steps of the method implemented by the processor in the method example in FIG. 2 or FIG. 3. For brevity, details are not described herein again.

This application further provides a chip and the chip is connected to a memory. The chip includes a processor and a cache. The processor is configured to read and execute computer program code stored in the memory, and perform operation steps of the method implemented by the processor in the method example in FIG. 2 or FIG. 3. For brevity, details are not described herein again.

All or some of the foregoing embodiments may be implemented through software, hardware, firmware, or any combination thereof. When software is used to implement embodiments, all or some of the foregoing embodiments may be implemented in a form of a computer program product. The computer program product includes one or more computer program instructions. When the computer program instructions are loaded or executed on a computer, all or some of the procedures or functions according to embodiments of the present invention are generated. The computer may be a general-purpose computer, a dedicated computer, a computer network, or other programmable apparatuses. The computer program instructions may be stored in a computer-readable storage medium or may be transmitted from a computer-readable storage medium to another computer-readable storage medium. For example, the computer program instructions may be transmitted from a website, a computer, a server, or a data center to another website, another computer, another server, or another data center in a wired (for example, a coaxial cable, an optical fiber, or a digital subscriber line (DSL)) or wireless (for example, infrared, radio, microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Clearly, a person skilled in the art can make various modifications and variations to this application without departing from the scope of this application. This application is intended to cover these modifications and variations of this application provided that they fall within the scope of protection defined by the following claims and their equivalent technologies.

The foregoing descriptions are merely specific implementations of this application. Any variation or replacement readily figured out by a person skilled in the art based on the specific implementations provided in this application shall fall within the protection scope of this application.

**Claims**

1. A data processing method, wherein the method is performed by a processor and the method comprises:

    obtaining executable code, wherein the executable code comprises code corresponding to a first extension instruction, the first extension instruction indicates that target data needs to reside in a cache, and the target data is data to be frequently invoked in a process of executing the executable code;
    executing the code corresponding to the first extension instruction; and
    obtaining the target data and storing the target data in the cache.

2. The method according to claim 1, wherein the obtaining, by the processor, executable code comprises:

    analyzing source code to determine the target data, wherein a reuse score of the target data is greater than a threshold, and the reuse score of the target data indicates a reuse degree of the target data; and
    after inserting the first extension instruction into the source code, compiling the source code to generate the executable code.

3. The method according to claim 1 or 2, wherein the obtaining, by the processor, the target data and storing the target data in the cache comprises:
    sending a residence instruction to the cache, wherein the residence instruction indicates that the target data is to be stored in the cache, so as to indicate the cache to obtain the target data and store the target data according to the residence instruction.

4. The method according to any one of claims 1 to 3, wherein a last level cache LLC of the cache is a high bandwidth memory HBM, and the first extension instruction indicates that the target data resides in the LLC.

5. The method according to any one of claims 1 to 4, wherein the method further comprises:
    clearing, by the cache, data other than the target data in the cache when idle space in the cache is less than a threshold.

6. The method according to any one of claims 1 to 5, wherein the method further comprises:

    obtaining an event recorded by a performance monitoring unit PMU;
    updating the target data based on the event; and
    after inserting a second extension instruction into the source code, re-compiling the source code to generate executable code, and executing the executable code generated through re-compilation, wherein the second extension instruction indicates that the updated target data needs to reside in the cache.

7. The method according to any one of claims 1 to 6, wherein the inserting, by the processor, the first extension instruction into the source code comprises:
    inserting the first extension instruction into an adjacent row of code invoking the target data for the first time in the source code.

8. The method according to any one of claims 1 to 7, wherein the analyzing, by the processor, source code to determine the target data comprises:

    determining a loop sequence of each function in the source code, wherein the loop sequence of the function comprises at least one loop of the function;
    for a loop sequence of any function, calculating a reuse score of data corresponding to an access node comprised in each loop in the loop sequence of the function; and
    determining the target data based on the reuse score of the data corresponding to the access node.

9. A processor, wherein the processor comprises a logic circuit and a power supply circuit, wherein the power supply circuit is configured to supply power to the logic circuit, and the logic circuit is configured to perform the operation steps of the method according to any one of claims 1 to 8.

10. A chip, wherein the chip of a computer comprises a processor and a cache, wherein the processor is configured to perform the operation steps of the method according to any one of claims 1 to 8, to store target data into the cache.

11. A computing device, wherein the computing device comprises a processor, a cache, and a memory, wherein the memory is configured to store computer program code, and the processor is configured to perform the operation steps of the method according to any one of claims 1 to 8.

12. A data processing apparatus, wherein the apparatus comprises:

a compilation module, configured to obtain executable code, wherein the executable code comprises code corresponding to a first extension instruction, the first extension instruction indicates that target data needs to reside in a cache, and the target data is data to be frequently invoked in a process of executing the executable code; and
an execution module, configured to execute the code corresponding to the first extension instruction in the executable code, obtain the target data, and store the target data in the cache.

13. The apparatus according to claim 12, wherein the compilation module is configured to:

analyze source code to determine the target data, wherein a reuse score of the target data is greater than a threshold, and the reuse score of the target data indicates a reuse degree of the target data; and
after inserting the first extension instruction into the source code, compile the source code to generate the executable code.

14. The apparatus according to claim 12 or 13, wherein when the execution module obtains the target data and stores the target data in the cache, the execution module is configured to:
send a residence instruction to the cache, wherein the residence instruction indicates that the target data is to be stored in the cache, so as to indicate the cache to obtain the target data and store the target data according to the residence instruction.

15. The apparatus according to any one of claims 12 to 14, wherein a last level cache LLC of the cache is a high bandwidth memory HBM, and the first extension instruction indicates that the target data resides in the LLC.

16. The apparatus according to any one of claims 12 to 15, wherein

the compilation module is further configured to: obtain an event recorded by a performance monitoring unit PMU; update the target data based on the event; and after inserting a second extension instruction into the source code, re-compile the source code to generate executable code, wherein the second extension instruction indicates that the updated target data needs to reside in the cache; and
the execution module is specifically configured to execute the executable code generated through re-compilation.

17. The apparatus according to any one of claims 12 to 16, wherein when the compilation module inserts the first extension instruction into the source code, the compilation module is configured to:
insert the first extension instruction into an adjacent row of code invoking the target data for the first time in the source code.

18. The apparatus according to any one of claims 12 to 17, wherein when the compilation module analyzes the source code to determine the target data, the compilation module is configured to:

determine a loop sequence of each function in the source code, wherein the loop sequence of the function comprises at least one loop of the function;
for a loop sequence of any function, calculate a reuse score of data corresponding to an access node comprised in a loop in the loop sequence of the function, wherein the reuse score indicates a reuse degree of the data in the source code; and
determine the target data based on the reuse score of the data corresponding to the access node.

19. A computer-readable storage medium, wherein the computer-readable storage medium comprises instructions, and when the instructions are run on a computer, the computer is enabled to perform the operation steps of the method according to any one of claims 1 to 8.

Processor 100

Compiler 110

PMU 120

Cache 200

Last level cache 210

Memory 300

FIG. 1

**Processor 100**

**PMU 120**

207: The compiler updates the target data
based on an event recorded by the PMU

**Compiler 110**

Source
code

202: Analyze the
source code to
determine target data

Updated
target data

**Memory 300**

201: Obtain
source code

Source
code

**Cache 200**

**LLC 210**

206:
Residence
instruction

203: Insert an
extension instruction

Extension
instruction

208: Insert the extension
instruction for the
updated target data

Extension
instruction

Source code

Extension
instruction

Source code

Extension
instruction

204:
Compile

Executable code

Extension
instruction

Executable code

Extension
instruction

209:
Compile

205: Execute

Executable code

Extension
instruction

FIG. 2

2021

A processor filters a key loop from source code

2022

The processor determines a key loop sequence of each function in the source code

2023

For a key loop sequence of any function, the processor traces an access/storage node including an access/storage instruction in each key loop of the key loop sequence, to determine data corresponding to the access/storage node

2024

The processor calculates a reuse score of data corresponding to each access/storage node

2025

The processor uses N pieces of data with maximum reuse scores as target data

FIG. 3

*1*   _1 = (long unsigned int) fEnd;

*2*   _2 = _1 * 4;

*3*   v_3 = uPtr(D) + _2;

*4*   _4 = &MEM[base: v_3, index: i, step: 4, offset: 0B];

*5*   vect__5 = .MASK_LOAD (_4, 32B, loop_mask_6);

FIG. 4A

*1*   _1 = MEM[base: lPtr(D), index: i, step: 4, offset: 0B];

*2*   _2 = (long unsigned int) _1;

*3*   _3 = _2 * 8;

*4*   _4 = psiPtr(D) + _3;

*5*   _5 =[_4];

FIG. 4B

500

Compilation module 501 — Execution module 502

FIG. 5

10

Computing device

Processor 100

Cache 200

400

Memory 300

Communication interface 600

FIG. 6

## INTERNATIONAL SEARCH REPORT

| International application No. |
|---|
| **PCT/CN2023/100767** |

### A. CLASSIFICATION OF SUBJECT MATTER

G06F 11/34(2006.01)i; G06F 3/06(2006.01)i

According to International Patent Classification (IPC) or to both national classification and IPC

### B. FIELDS SEARCHED

Minimum documentation searched (classification system followed by classification symbols)

IPC: G06F 11/-, G06F 3/-

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 频繁调用, 缓存, 数据读写, 速度, 数据, 读取, 缓存策略, frequent w call?, cache, data w read, write, speed, data, strategy

### C. DOCUMENTS CONSIDERED TO BE RELEVANT

| Category* | Citation of document, with indication, where appropriate, of the relevant passages | Relevant to claim No. |
|---|---|---|
| Y | CN 112527638 A (BEIJING DAMI TECHNOLOGY CO., LTD.) 19 March 2021 (2021-03-19) description, paragraphs [0059]-[0121] and [0158]-[0159], and figures 1-4 | 1-19 |
| Y | CN 101551783 A (HAIER (BEIJING) IC DESIGN CO., LTD.) 07 October 2009 (2009-10-07) description, p. 3, line 13 to p. 4, line 8, and figures 1-2 | 1-19 |
| A | CN 107562915 A (ZHENGZHOU YUNHAI INFORMATION TECHNOLOGY CO., LTD.) 09 January 2018 (2018-01-09) entire document | 1-19 |
| A | CN 108762976 A (ZHENGZHOU YUNHAI INFORMATION TECHNOLOGY CO., LTD.) 06 November 2018 (2018-11-06) entire document | 1-19 |
| A | CN 109800184 A (PING AN TECHNOLOGY (SHENZHEN) CO., LTD.) 24 May 2019 (2019-05-24) entire document | 1-19 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 September 2023** | **21 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/100767**

**C.    DOCUMENTS CONSIDERED TO BE RELEVANT**

| Category* | Citation of document, with indication, where appropriate, of the relevant passages | Relevant to claim No. |
|---|---|---|
| A | CN 110147258 A (PING AN TECHNOLOGY (SHENZHEN) CO., LTD.) 20 August 2019 (2019-08-20)<br>        entire document | 1-19 |

Form PCT/ISA/210 (second sheet) (July 2022)

**INTERNATIONAL SEARCH REPORT**
Information on patent family members

International application No.

**PCT/CN2023/100767**

| Patent document cited in search report | | | Publication date (day/month/year) | Patent family member(s) | | | Publication date (day/month/year) |
|---|---|---|---|---|---|---|---|
| CN | 112527638 | A | 19 March 2021 | None | | | |
| CN | 101551783 | A | 07 October 2009 | CN | 101551783 | B | 20 October 2010 |
| CN | 107562915 | A | 09 January 2018 | None | | | |
| CN | 108762976 | A | 06 November 2018 | None | | | |
| CN | 109800184 | A | 24 May 2019 | None | | | |
| CN | 110147258 | A | 20 August 2019 | WO | 2020211363 | A1 | 22 October 2020 |
| | | | | CN | 110147258 | B | 16 August 2022 |

Form PCT/ISA/210 (patent family annex) (July 2022)

**REFERENCES CITED IN THE DESCRIPTION**

**Patent documents cited in the description**

- CN 202210724755
- CN 202211103960